# EUROPEAN PATENT APPLICATION

(11) **EP 4 682 496 A1**
(43) Date of publication of application: **21.01.2026**
(21) Application number: 25181498.4
(22) Date of filing: 06.06.2025
(51) Int. Cl.: G01L 1/22, B23Q 17/00, B23Q 17/09, G01L 5/00

(54) **FORCE DETECTION DEVICE AND TOOL HOLDER**

(30) Priority: 16.07.2024 TW 113126618
(71) Applicant: Machsync Co., Ltd., Taichung City, 428 (TW)
(72) Inventor: CHEN, JUI-TENG, 404 Taichung City (TW)
(74) Representative: Cabinet Chaillot

(57) **Abstract**

A force detection device (100) defined with a central axis (A) and includes a main body (10), a force detection module (30) including several force detection units, an inner cylinder (40) disposed in the main body (10) and having a receiving space (41), a circuit board assembly (50) disposed in the receiving space (41) and including a wireless transmission module (55) and a control module (57) electrically connected to the force detection module (30) and the wireless transmission module (55), and an encapsulation material (80). An outer annular surface (12) of the main body (10) is dented to form an annular receiving groove (12a). Each of the force detection units includes two strain detection components symmetrically disposed in the annular receiving groove (12a) along the central axis (A). The control module (57) receives and transmits a detection signal of the force detection module (30) through the wireless transmission module (55).

## Description

### BACKGROUND OF THE INVENTION

### Technical Field

The present invention relates generally to a tool holder, and more particularly to a tool holder with a force detection device.

### Description of Related Art

It is known that a tool holder plays an important role in the manufacturing process of the precision parts. The tool holder is adapted to be connected to a spindle of a processing machine and a tool, so that a rotational power of the spindle could be transmitted to the tool through the tool holder to operate the manufacturing process of cutting. Because of a vibration generated by the processing machine and an instant strain variation on the tool and the tool holder when the tool cuts an object and is in contact with an uneven surface of the object, an accuracy of the tool holder driving the tool to cut the object is easily affected and even a useful life of the tool holder and a useful life of the tool are reduced.

In addition, when the categories of the objects being cut are different, the corresponding tool needs to be replaced. At that time, a force of the tool holder correspondingly varies. Alternatively, the qualities of the tools with the identical specification might be different, so that the force of the tool holder could be unequal and the accuracy of the tool holder driving the tool to cut the object and the useful life of the tool holder could be also affected. In addition, the aforementioned situation is hard to be instantly determined by the on-site operators. Therefore, how to generate an instant monitoring information for the force of the tool holder is the technical issue in the art.

### BRIEF SUMMARY OF THE INVENTION

In view of the above, the primary objective of the present invention is to provide a force detection device and a tool holder, which could instantly detect a force situation and could correspondingly generate a detection signal.

The present invention provides a force detection device defined with a central axis and including a main body, a force detection module, an inner cylinder, a circuit board assembly, and an encapsulation material, wherein the main body is cylindrical and has a hollow portion. An outer annular surface of the main body is dented to form an annular receiving groove. The outer annular surface of the main body and the annular receiving groove are located on a radial periphery of the hollow portion. The force detection module includes a plurality of force detection units, wherein each of the force detection units includes two strain detection components. The two strain detection components of each of the force detection units are symmetrically disposed in the annular receiving groove of the main body along the central axis. The inner cylinder is disposed in the hollow portion of the main body and has a receiving space. The circuit board assembly is disposed in the receiving space and includes a control module and a wireless transmission module, wherein the control module is electrically connected to the force detection module and the wireless transmission module. The control module receives at least one detection signal of the force detection module and transmits the at least one detection signal of the force detection module through the wireless transmission module. The encapsulation material is disposed in the annular receiving groove of the main body and covers the force detection module.

The present invention further provides a tool holder adapted to be connected to a processing spindle and a tool and including the force detection device, a tool holder head, and a chuck, wherein the tool holder head is adapted to be connected to the processing spindle and is connected to an end of the main body. The chuck is adapted to be connected to the tool and is connected to another end of the main body.

With the aforementioned design, through the force detection device and the tool holder provided with the force detection module disposed in the main body, an instant force variation of the tool holder could be transformed into the at least one corresponding detection signal. In addition, through the circuit board assembly disposed in the inner cylinder, the control module receives the at least one detection signal and transmits the at least one detection signal of the force detection module through the wireless transmission module, so that the operators could instantly receive the at least one detection signal through an external electronic device. Therefore, a purpose of effectively monitoring and analyzing the instant force situation of the tool holder could be achieved.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of the tool holder according to an embodiment of the present invention;
FIG. 2 is a schematic view of a part of the tool holder according to the embodiment of the present invention;
FIG. 3 is an exploded view of a part of the tool holder in FIG. 2;
FIG. 4 is a perspective view of a part of the tool holder seen from another direction according to the embodiment of the present invention;
FIG. 5 is a sectional view along the 5-5 line in FIG. 4;
FIG. 6 is a schematic view of the inner cylinder and the circuit board assembly according to the embodiment of the present invention;
FIG. 7 is a sectional view along the 7-7 line in FIG. 2;
FIG. 8 is a perspective view of a part of the tool holder, showing the force detection module according to the embodiment of the present invention;
FIG. 9 is a perspective view of a first force detection unit according to the embodiment of the present invention;
FIG. 10 is a circuit diagram of the first force detection unit according to the embodiment of the present invention;
FIG. 11 is a perspective view of a second force detection unit according to the embodiment of the present invention;
FIG. 12 is a circuit diagram of the second force detection unit according to the embodiment of the present invention;
FIG. 13 is a perspective view of a tensile force detection unit according to the embodiment of the present invention;
FIG. 14 is a circuit diagram of the tensile force detection unit according to the embodiment of the present invention;
FIG. 15 is a perspective view of a torque detection unit according to the embodiment of the present invention;
FIG. 16 is a circuit diagram of the torque detection unit according to the embodiment of the present invention;
FIG. 17 is a perspective view of a first circuit board according to the embodiment of the present invention; and
FIG. 18 is a perspective view of a second circuit board according to the embodiment of the present invention.

### DETAILED DESCRIPTION OF THE INVENTION

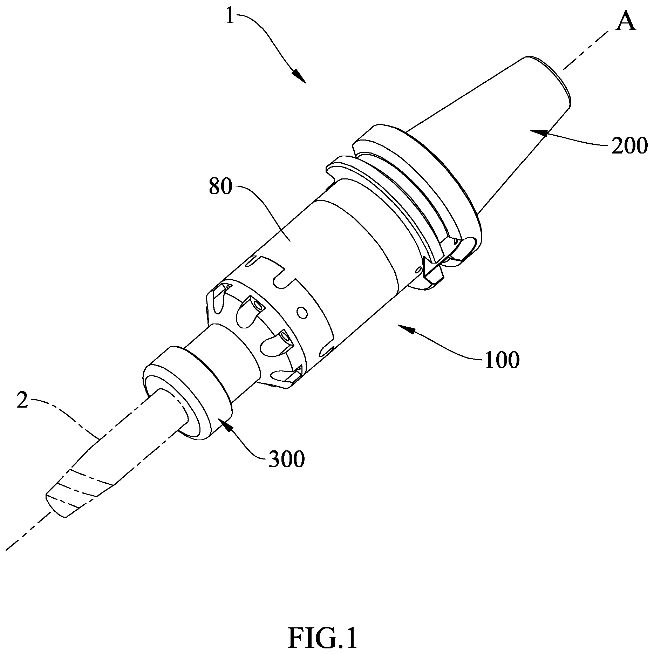

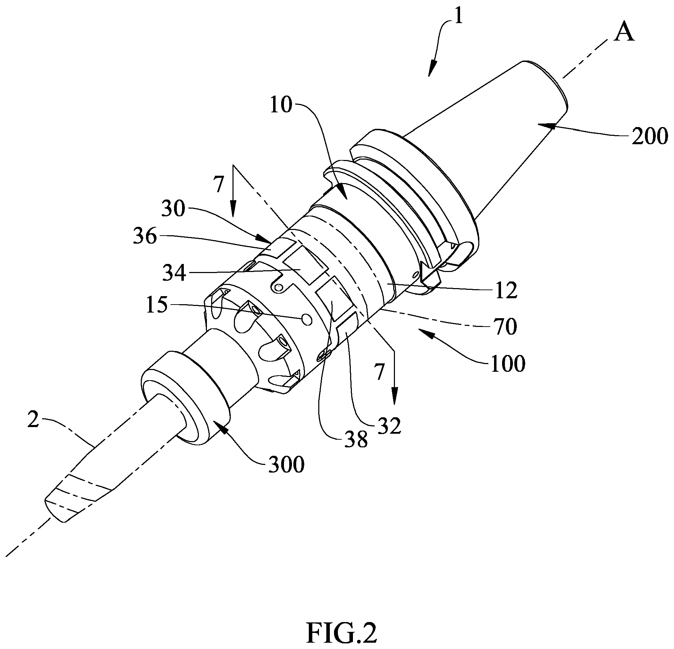

A tool holder 1 according to an embodiment of the present invention is illustrated in FIG. 1 to FIG. 5 and includes a tool holder head 200, a chuck 300, and a force detection device 100, wherein the tool holder head 200 has a first through hole 200a communicating with two ends of the tool holder head 200. The tool holder head 200 is adapted to be connected to a processing spindle (not shown) and is connected to an end of the force detection device 100. The chuck 300 has a second through hole 300a communicating with two ends of the chuck 300. The chuck 300 is adapted to be connected to a tool 2 and is connected to another end of the force detection device 100. In the current embodiment, the tool holder 1 is a rotary tool holder as an example.

The force detection device 100 is defined with a central axis A and includes a main body 10, a plurality of weights 20, a force detection module 30, an inner cylinder 40, a circuit board assembly 50, and an encapsulation material 80.

An end of the main body 10 is connected to the tool holder head 200 along the central axis A. Another end of the main body 10 is connected to the chuck 300 along the central axis A. The main body 10 is cylindrical and has a hollow portion 11, wherein the hollow portion 11 communicates with the two ends of the main body 10 along the central axis A to respectively form a first opening 11a and a second opening 11b. The first opening 11a communicates with the first through hole 200a of the tool holder head 200. The second opening 11b communicates with the second through hole 300a of the chuck 300. An outer annular surface 12 of the main body 10 is dented to form an annular receiving groove 12a and a plurality of wire grooves 12b. The outer annular surface 12 of the main body 10 and the annular receiving groove 12a are located on a radial periphery of the hollow portion 11. The wire grooves 12b communicate with the annular receiving groove 12a. The main body 10 has a plurality of first wire holes 16, a plurality of inserting holes 13, at least one first combination hole 14, and a first light-transmissive hole 15, wherein each of the first wire holes 16 is disposed in each of the wire grooves 12b and communicates with the hollow portion 11. The inserting holes 13 are located around the second opening 11b to allow the weights 20 to fit in the inserting holes 13. The at least one first combination hole 14 communicates with the hollow portion 11 and is adapted to be combined with the inner cylinder 40. The first light-transmissive hole 15 communicates with the hollow portion 11 and is adapted to be combined with a light guide column (not shown) to allows a light to pass through the first light-transmissive hole 15. In the current embodiment, the main body 10 is made of metal. A number of the inserting holes 13 corresponds to a number of the weights 20. The number of the inserting holes 13 and the number of the weights 20 could be adjusted upon the required demand to achieve a dynamic balancing weight.

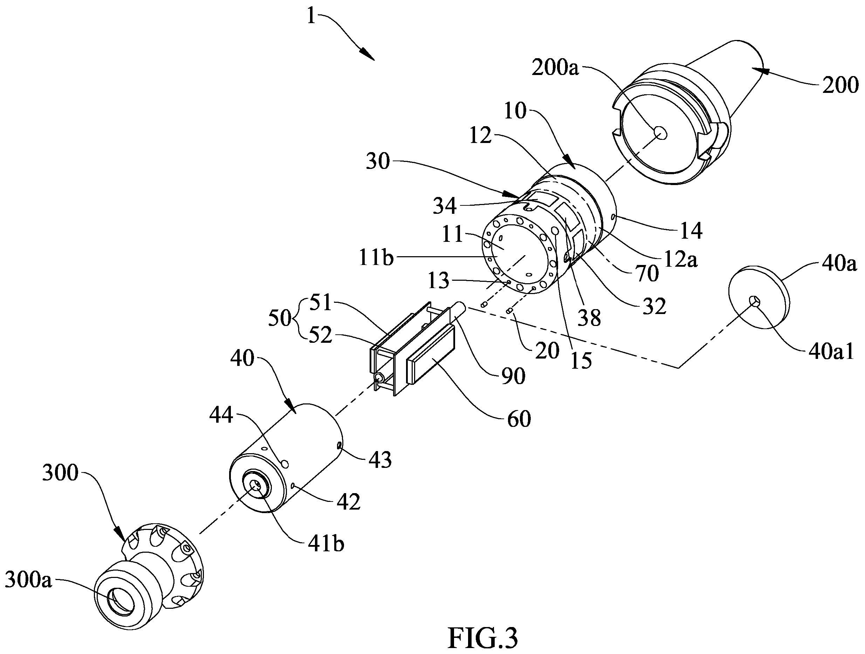

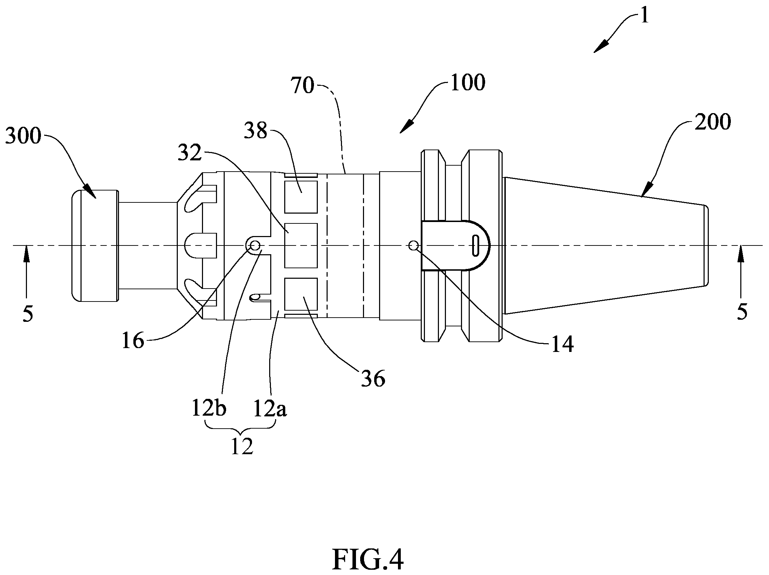

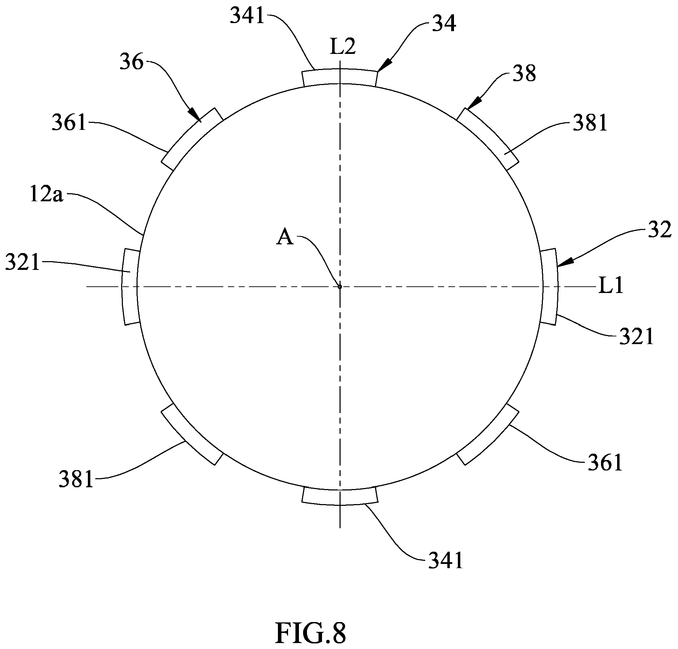

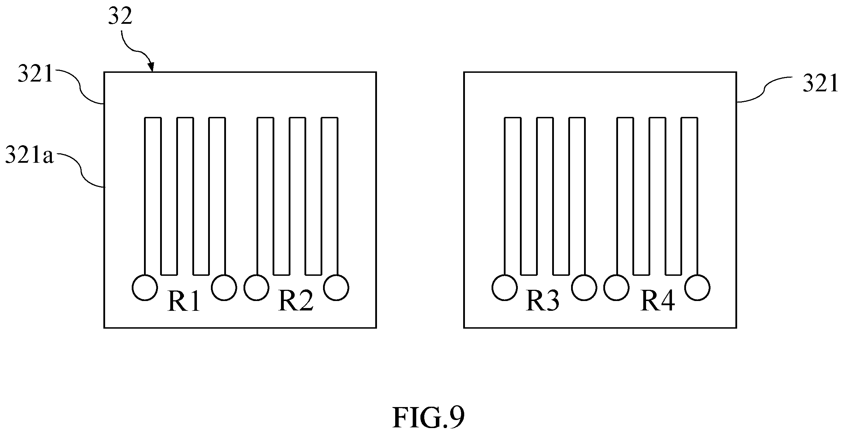

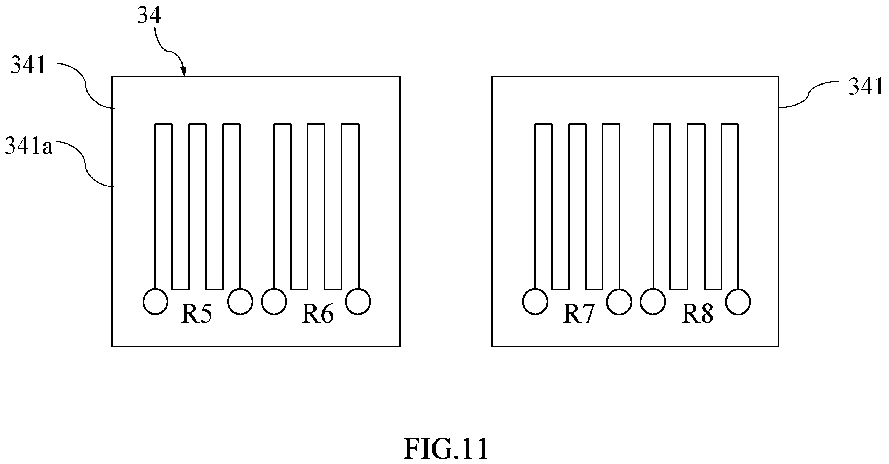

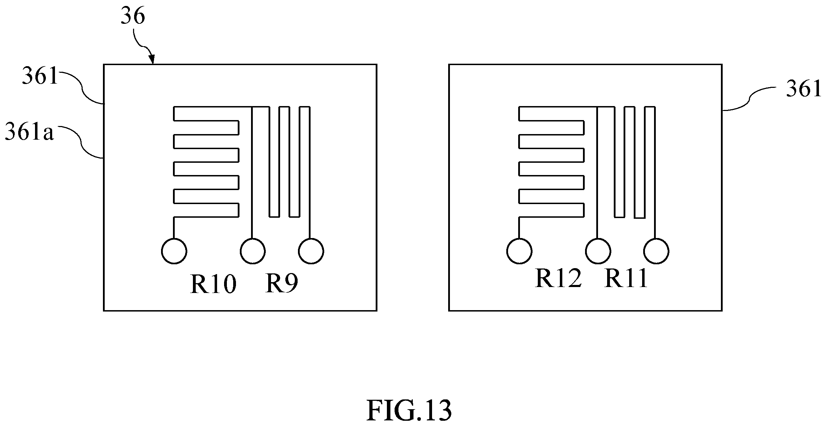

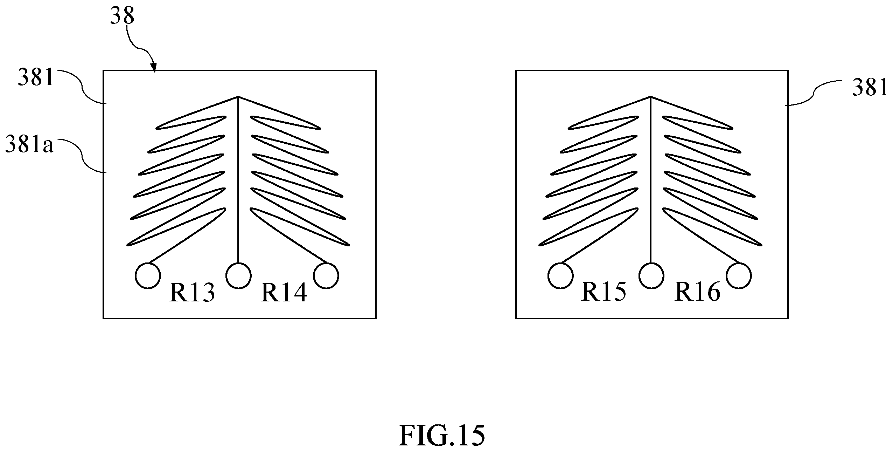

Referring to FIG 8 to FIG 16, the force detection module 30 is adapted to detect a force of the tool holder 1 to output at least one detection signal. In the current embodiment, the at least one detection signal includes a plurality of detection signals which are a first detection signal V_{S1}, a second detection signal V_{S2}, a third detection signal V_{S3}, and a fourth detection signal V_{S4}. The force detection module 30 includes a plurality of force detection units, wherein each of the force detection units includes two strain detection components. In the current embodiment, each of the strain detection components includes a flexible substrate and two strain detection structures disposed on the flexible substrate. Referring to FIG 3 and FIG 4, the strain detection components are disposed in the annular receiving groove 12a. Each of the strain detection components is attached on a groove surface of the annular receiving groove 12a. The strain detection components are connected through a flexible printed circuit (FPC) and a plurality of wires (not shown). The wires pass through the first wire holes 16 to transmit the detection signals. The force detection units include a first force detection unit 32, a second force detection unit 34, a tensile force detection unit 36, and a torque detection unit 38.

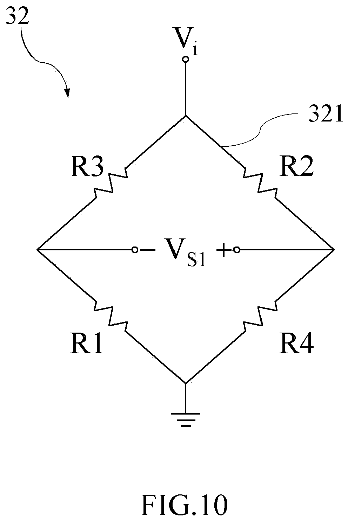

The first force detection unit 32 is adapted to detect a force of the tool holder 1 along a first axis L1 to output the corresponding first detection signal V_{S1}. The first axis L1 is perpendicular to the central axis A. The two strain detection components of the first force detection unit 32 are two first strain detection components 321, wherein the two first strain detection components 321 are symmetrically disposed in the annular receiving groove 12a along the first axis L1. Each of the two first strain detection components 321 includes a first flexible substrate 321a and two first strain detection structures R1~R4 disposed on the first flexible substrate 321a of each of the two first strain detection components 321. Each of the first strain detection structures R1~R4 has a resistance, so that the first force detection unit 32 could be formed as a wheatstone bridge (i.e., a first wheatstone bridge) as shown in FIG 10 through a wiring of the flexible printed circuit. The first wheatstone bridge has a first arm and a second arm. The two first strain detection structures R3,R4 of the first strain detection component 321 are respectively located in an upper arm of the first arm and a lower arm of the second arm. The two first strain detection structures R1,R2 of the other first strain detection component 321 are respectively located in a lower arm of the first arm and an upper arm of the second arm. When the tool holder 1 is applied with a strain along the first axis L1, the resistance of each of the first strain detection structures R1~R4 correspondingly varies. When a side of the tool holder 1 along the first axis L1 is compressed and another side of the tool holder 1 along the first axis L1 is relatively stretched, a resistance of the first strain detection component 321 on the compressed side of the tool holder 1 is less than a resistance of the other first strain detection component 321 on the stretched side of the tool holder 1, thereby generating the corresponding first detection signal V_{S1}. When the strain which the tool holder 1 is applied with along the first axis L1 is greater, an absolute value of the first detection signal V_{S1} is greater. Because the resistance of each of the two first strain detection components 321 relatively varies (i.e., the resistances of the two first strain detection structures R1,R2 of the first strain detection component 321 or the resistances of the two first strain detection structures R3,R4 of the first strain detection component 321 increase and the resistances of the two first strain detection structures R3,R4 of the other first strain detection component 321 or the resistances of the two first strain detection structures R1,R2 of the other first strain detection component 321 decrease), the first detection signal V_{S1} with the wheatstone bridge could be raised. In other words, a response of the first detection signal V_{S1} could be raised.

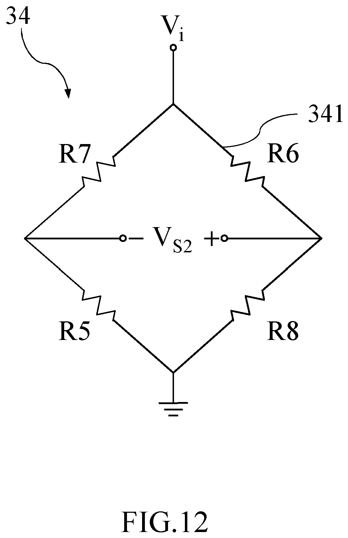

The second force detection unit 34 is adapted to detect a force of the tool holder 1 along a second axis L2 to output the corresponding second detection signal V_{S2}. The second axis L2 is perpendicular to the central axis A and the first axis L1. The two strain detection components of the second force detection unit 34 are two second strain detection components 341, wherein the two second strain detection components 341 are symmetrically disposed in the annular receiving groove 12a along the second axis L2. Each of the two second strain detection components 341 includes a second flexible substrate 341a and two second strain detection structures R5~R8 disposed on the second flexible substrate 341a of each of the two second strain detection components 341. Each of the second strain detection structures R5~R8 has a resistance, so that the second force detection unit 34 could be formed as a wheatstone bridge (i.e., a second wheatstone bridge) through the wiring of the flexible printed circuit as shown in the FIG 12. The second wheatstone bridge has a first arm and a second arm. The two second strain detection structures R7,R8 of the second strain detection component 341 are respectively located in an upper arm of the first arm of the second wheatstone bridge and a lower arm of the second arm of the second wheatstone bridge. The two second strain detection structures R5,R6 of the other second strain detection component 341 are respectively located in a lower arm of the first arm of the second wheatstone bridge and an upper arm of the second arm of the second wheatstone bridge. When the tool holder 1 is applied with a strain along the second axis L2, the resistance of each of the second strain detection structures R5~R8 correspondingly varies. When a side of the tool holder 1 along the second axis L2 is compressed and another side of the tool holder 1 along the second axis L2 is stretched, a resistance of the second strain detection component 341 on the compressed side of the tool holder 1 is less than a resistance of the other second strain detection component 341 on the stretched side of the tool holder 1, thereby generating the corresponding second detection signal V_{S2}. In addition, when the strain which the tool holder 1 is applied with along the second axis L2 is greater, an absolute value of the second detection signal V_{S2} is greater. Because the resistances of the two second strain detection components 341 relatively vary (i.e., the resistances of the two second strain detection structures R5,R6 of the second strain detection component 341 or the resistances of the two second strain detection structures R7,R8 of the second strain detection component 341 increase and the resistances of the two second strain detection structures R7,R8 of the other second strain detection component 341 or the resistances of the two second strain detection structures R5,R6 of the other second strain detection component 341 decrease), the second detection signal V_{S2} with the wheatstone bridge could be raised. In other words, a response of the second detection signal V_{S2} could be raised.

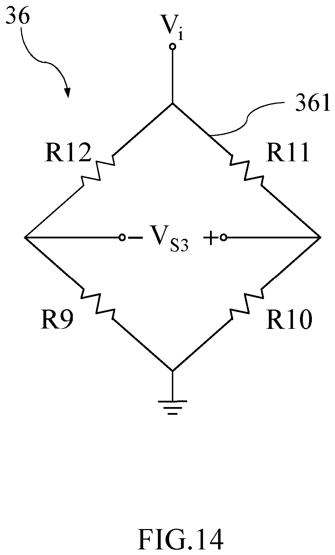

The tensile force detection unit 36 is adapted to detect a tensile force of the tool holder 1 along the central axis A to output the corresponding third detection signal V_{S3}. The two strain detection components of the tensile force detection unit 36 are two tensile force detection components 361, wherein the two tensile force detection components 361 are symmetrically disposed in the annular receiving groove 12a of the main body 10 along the central axis A. Each of the two tensile force detection components 361 is located between each of the two first strain detection components 321 and each of the two second strain detection components 341. Each of the two tensile force detection components 361 includes a third flexible substrate 361a and two tensile force detection structures R9~R12 disposed on the third flexible substrate 361a of each of the two tensile force detection components 361. Each of the tensile force detection structures R9~R12 has a resistance, so that the tensile force detection unit 36 could be formed as a wheatstone bridge (i.e., a third wheatstone bridge) through the wiring of the flexible printed circuit as shown in FIG 14. The two tensile force detection structures R11,R12 of the tensile force detection component 361 are respectively located in an upper arm of a first arm of the third wheatstone bridge and an upper arm of a second arm of the third wheatstone bridge. The two tensile force detection structures R9,R10 of the other tensile force detection component 361 are respectively located in a lower arm of the first arm of the third wheatstone bridge and a lower arm of the second arm of the third wheatstone bridge. A resistance of each of the two tensile force detection components 361 varies corresponding to the tensile force which the tool holder 1 is applied with along the central axis A, thereby generating the corresponding third detection signal V_{S3}. When the tensile force which the tool holder 1 is applied with along the central axis A is greater, an absolute value of the third detection signal V_{S1} is greater.

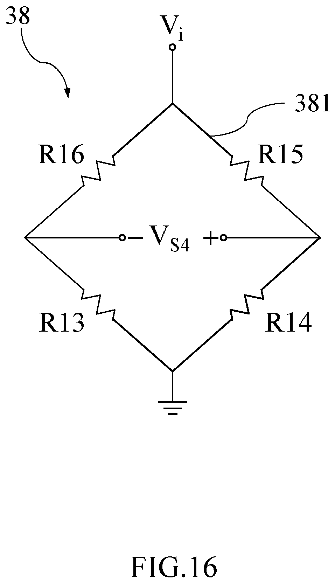

The torque detection unit 38 is adapted to detect a torque which the tool holder 1 is applied with to output the corresponding fourth detection signal V_{S4}. The two strain detection components of the torque detection unit 38 are two torque detection components 381, wherein the two torque detection components 381 are symmetrically disposed in the annular receiving groove 12a of the main body 10 along the central axis A. Each of the two torque detection components 381 is located between each of the two first strain detection components 321 and each of the two second strain detection components 341. Each of the two torque detection components 381 includes a fourth flexible substrate 381a and two torque detection structures R13~R16 disposed on the fourth flexible substrate 381a of each of the two torque detection components 381. Each of the torque detection structures R13~R16 has a resistance, so that the torque detection unit 38 could be formed as a wheatstone bridge (i.e., a fourth wheatstone bridge) through the wiring of the flexible printed circuit as shown in FIG 16. The two torque detection structures R15,R16 of the torque detection component 381 are respectively located in an upper arm of a first arm of the fourth wheatstone bridge and an upper arm of a second arm of the fourth wheatstone bridge. The two torque detection structures R13,R14 of the other torque detection component 381 are respectively located in a lower arm of the first arm of the fourth wheatstone bridge and a lower arm of the second arm of the fourth wheatstone bridge. A resistance of each of the two torque detection components 381 varies corresponding to the torque which the tool holder 1 is applied with, thereby generating the corresponding fourth detection signal V_{S4}. When the torque which the tool holder 1 is applied with is greater, an absolute value of the fourth detection signal V_{S4} is greater.

In other embodiments, a number of the force detection units could be adjusted upon the required demand to correspond to the forces of the tool holder 1 in different directions, thereby receiving the corresponding detection signals.

Referring to FIG 3 to FIG 7, the inner cylinder 40 is disposed in the hollow portion 11 of the main body 10 and has a receiving space 41 communicating with two ends of the inner cylinder 40 to form a third opening 41a and a fourth opening 41b. The end of the inner cylinder 40 having the third opening 41a is combined with an end cover 40a, wherein the end cover 40a covers the third opening 41a and has a third through hole 40a1 to communicate with the receiving space 41, the first opening 11a, and the first through hole 200a of the tool holder head 200. The fourth opening 41b communicates with the second opening 11b and the second through hole 300a of the chuck 300. The receiving space 41 has a first chamber 411, a second chamber 412, and a third chamber 413, wherein the first chamber 411 and the third chamber 413 are respectively located on two opposite sides of the second chamber 412 and communicate with the second chamber 412. The inner cylinder 40 has a plurality of second wire holes 42, at least one second combination hole 43, and a second light-transmissive hole 44, wherein a number of the second wire holes 42 and a position of each of the second wire holes 42 respectively correspond to a number of the first wire holes 16 and a position of each of the first wire holes 16 to allow the wires to pass through the second wire holes 42 and the first wire holes 16. The second wire holes 42 communicate with the receiving space 41. A position of the at least one second combination hole 43 and a number of the at least one second combination hole 43 respectively correspond to a position of the at least one first combination hole 14 and a number of the at least one first combination hole 14. The second light-transmissive hole 44 communicates with the receiving space 41 and is combined with the light guide column corresponding to the first light-transmissive hole 15. In the current embodiment, the number of the at least one second combination hole 43 is two and the number of the at least one first combination hole 14 is two; each of the second combination hole 43 is a blind hole. Therefore, through a plurality of set screws sequentially screwed into the at least one corresponding first combination hole 14 and the at least one second combination hole 43, the main body 10 could be combined with the inner cylinder 40. In addition, the inner cylinder 40 is made of plastic.

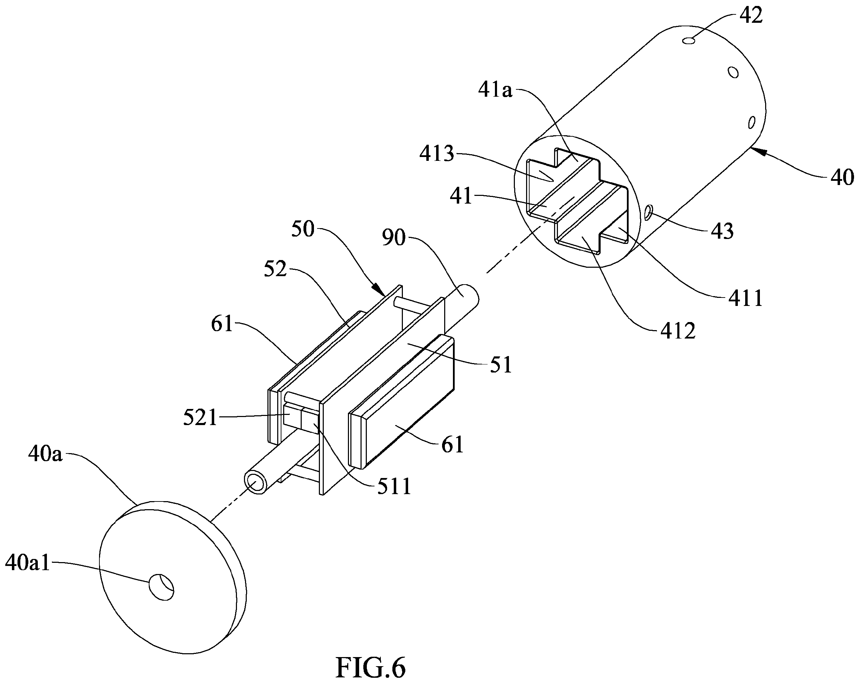

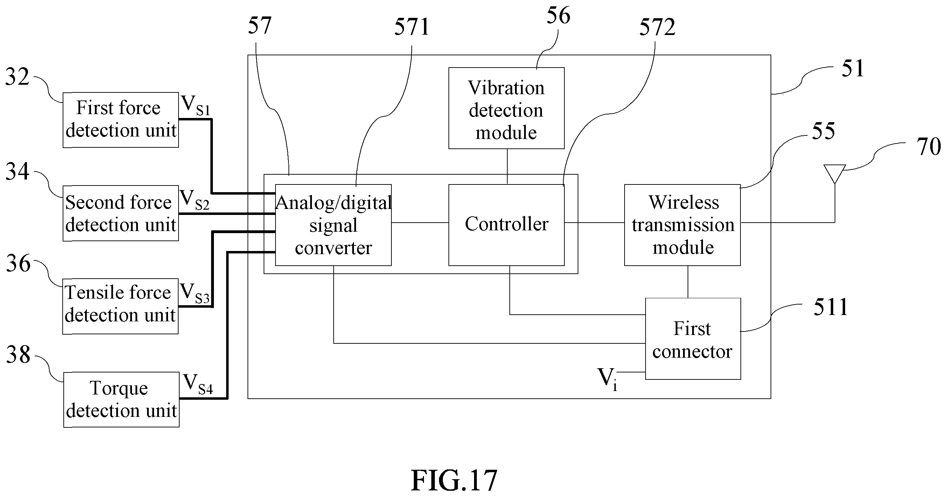

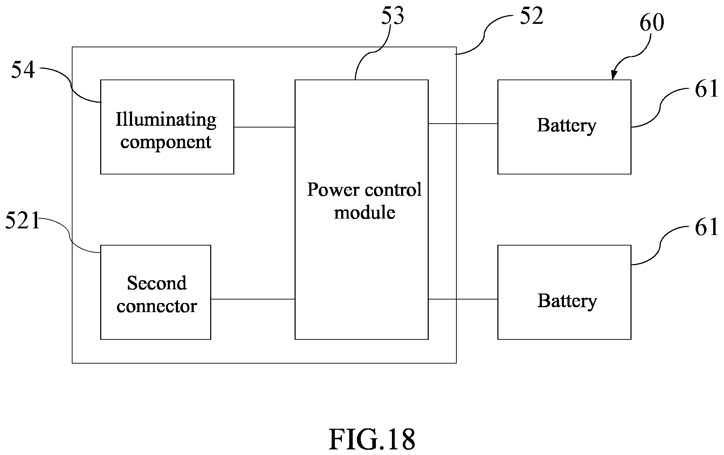

Referring to FIG 6, FIG 7, FIG 17, and FIG 18, the circuit board assembly 50 is disposed in the second chamber 412 of the receiving space 41 and includes a first circuit board 51, a second circuit board 52, a power control module 53, an illuminating component 54, a vibration detection module 56, a control module 57, and a wireless transmission module 55, wherein the first circuit board 51 includes a first connector 511 to be electrically connected to the second circuit board 52. The control module 57, the wireless transmission module 55, and the vibration detection module 56 are disposed on the first circuit board 51. The first connector 511 is electrically connected to the control module 57, the wireless transmission module 55, and the force detection module 30. The second circuit board 52 includes a second connector 521 to be connected to the first connector 511. The power control module 53 and the illuminating component 54 are disposed on a surface of the second circuit board 52 facing the first circuit board 51. The power control module 53 is adapted to be connected to a battery module 60 and is electrically connected to the second connector 521 and the illuminating component 54 to provide power to the control module 57, the wireless transmission module 55, the vibration detection module 56, the force detection module 30, and the illuminating component 54. Therefore, the force detection module 30 could receive an input voltage Vᵢ from the power control module 53 and could transform the input voltage Vᵢ into the first detection signal V_{S1}, the second detection signal V_{S2}, the third detection signal V_{S3}, and the fourth detection signal V_{S4}. The battery module 60 includes two batteries 61, wherein the two batteries 61 are respectively disposed in the first chamber 411 and the third chamber 413. A position of the first light-transmissive hole 15 and a position of the second light-transmissive hole 44 correspond to a position of the illuminating component 54. The light emitted by the illuminating component 54 passes through the first light-transmissive hole 15 and the second light-transmissive hole 44 through the light guide column.

The control module 57 includes an analog/digital signal converter 571 and a controller 572, wherein the controller 572 could be a microcontroller as an example. The controller 572 is electrically connected to the analog/digital signal converter 571 and the vibration detection module 56. The analog/digital signal converter 571 is electrically connected to the two first strain detection components 321, the two second strain detection components 341, the two tensile force detection components 361, and the two torque detection components 381 of the force detection module 30 through the flexible printed circuit and the wires. The controller 572 receives the first detection signal V_{S1}, the second detection signal V_{S2}, the third detection signal V_{S3}, and the fourth detection signal V_{S4} through the analog/digital signal converter 571 and controls the illuminating component 54 through the power control module 53 according to the first detection signal V_{S1}, the second detection signal V_{S2}, the third detection signal V_{S3}, and the fourth detection signal V_{S4}, so that the illuminating component 54 could emit the light to alert the operators.

The wireless transmission module 55 is electrically connected to the controller 572. The force detection device 100 further includes an antenna 70, wherein the antenna 70 is disposed in the annular receiving groove 12a and is electrically connected to the wireless transmission module 55. The antenna 70 is made through being printed on a flexible printed circuit. Therefore, the controller 572 transmits the first detection signal V_{S1}, the second detection signal V_{S2}, the third detection signal V_{S3}, and the fourth detection signal V_{S4} to an external electronic device through the wireless transmission module 55 and the antenna 70. In this way, the operators could instantly receive the first detection signal V_{S1}, the second detection signal V_{S2}, the third detection signal V_{S3}, and the fourth detection signal V_{S4} through the external electronic device to effectively monitor and analyze an operational situation of the cutting.

Referring to FIG 1 and FIG 4, the encapsulation material 80 is disposed in the annular receiving groove 12a and the wire grooves 12b of the main body 10. The encapsulation material 80 covers the force detection module 30 and the antenna 70 and is made of epoxy resin.

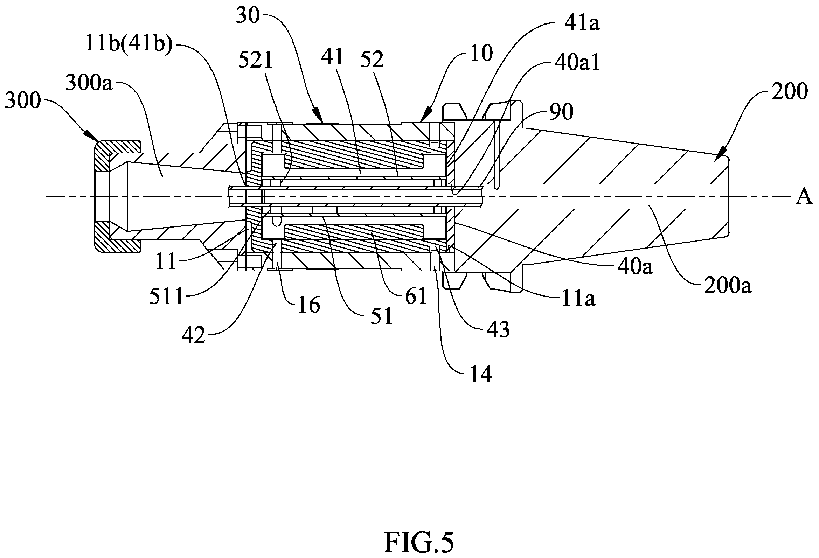

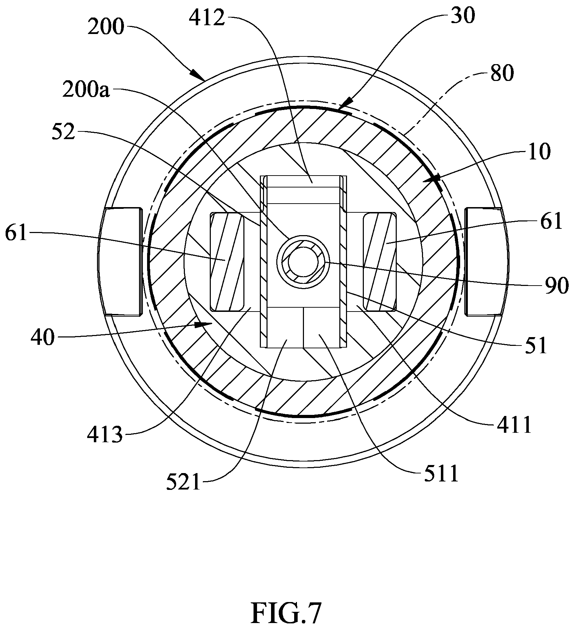

Referring to FIG 5 and FIG 7, the force detection device 100 further includes a pipe 90, wherein the pipe 90 extends along the central axis A and is disposed in the receiving space 41 of the inner cylinder 40. An end of the pipe 90 passes through the third through hole 40a1 and the first opening 11a to extends to the first through hole 200a of the tool holder head 200. Another end of the pipe 90 passes through the fourth opening 41b to extends to the second through hole 300a of the chuck 300. The pipe 90 is located between the first circuit board 51 and the second circuit board 52. Therefore, a cutting fluid could flow into the tool 2 through the first through hole 200a, the pipe 90, and the second through hole 300a, thereby avoiding that the cutting fluid is directly in contact with the first circuit board 51 and the second circuit board 52.

With the aforementioned design, the force detection device 100 and the tool holder 1 of the present invention are provided with the force detection module 30 disposed in the main body 10, so that an instant force variation of the tool holder 1 could be transformed into the corresponding first detection signal V_{S1}, the corresponding second detection signal V_{S2}, the corresponding third detection signal V_{S3}, and the corresponding fourth detection signal V_{S4}. In addition, through the circuit board assembly 50 disposed in the inner cylinder 40, the control module 57 receives the first detection signal V_{S1}, the second detection signal V_{S2}, the third detection signal V_{S3}, and the fourth detection signal V_{S4} and transmits the detection signals of the force detection module 30 through the wireless transmission module 55, so that the operators could instantly receive the detection signals of the force detection module 30 through the external electronic device to effectively monitor and analyze the instant operational situation of the cutting.

In addition, the plastic inner cylinder 40 could provide buffering to protect the circuit board assembly 50 and the two batteries 61 from being directly in contact with the rigid main body 10, thereby avoiding vibration and reducing a useful life of the circuit board assembly 50 and a useful life of the two batteries 61.

## Claims

1. A force detection device (100), which is defined with a central axis (A), comprising:
a main body (10) being cylindrical and having a hollow portion (11), wherein an outer annular surface (12) of the main body (10) is dented to form an annular receiving groove (12a); the outer annular surface (12) of the main body (10) and the annular receiving groove (12a) are located on a radial periphery of the hollow portion (11);
a force detection module (30) comprising a plurality of force detection units, wherein each of the plurality of force detection units comprises two strain detection components; the two strain detection components of each of the plurality of force detection units are symmetrically disposed in the annular receiving groove (12a) of the main body (10) along the central axis (A);
an inner cylinder (40) disposed in the hollow portion (11) of the main body (10) and having a receiving space (41);
a circuit board assembly (50) disposed in the receiving space (41) and comprising a control module (57) and a wireless transmission module (55), wherein the control module (57) is electrically connected to the force detection module (30) and the wireless transmission module (55); the control module (57) receives at least one detection signal of the force detection module (30) and transmits the at least one detection signal of the force detection module (30) through the wireless transmission module (55); and
an encapsulation material (80) disposed in the annular receiving groove (12a) of the main body (10) and covering the force detection module (30).

2. The force detection device (100) as claimed in claim 1, wherein the circuit board assembly (50) comprises a first circuit board (51) and a second circuit board (52); the first circuit board (51) is electrically connected to the second circuit board (52); the control module (57) and the wireless transmission module (55) are disposed on the first circuit board (51); a power control module (53) is dispoesd on the second circuit board (52); the power control module (53) is adapted to be connected to a battery module (60) to provide power to the control module (57) and the wireless transmission module (55).

3. The force detection device (100) as claimed in claim 2, wherein the receiving space (41) has a first chamber (411), a second chamber (412), and a third chamber (413); the first chamber (411) and the third chamber (413) are respectively located on two opposite sides of the second chamber (412) and communicate with the second chamber (412); the circuit board assembly (50) is disposed in the second chamber (412); the battery module (60) comprises two batteries (61), wherein the two batteries (61) are respectively disposed in the first chamber (411) and the third chamber (413).

4. The force detection device (100) as claimed in claim 1, wherein the main body (10) has a first light-transmissive hole (15); the inner cylinder (40) has a second light-transmissive hole (44); the circuit board assembly (50) comprises a illuminating component (54); the first light-transmissive hole (15) and the second light-transmissive hole (44) correspond to the illuminating component (54); a light emitted by the illuminating component (54) passes through the first light-transmissive hole (15) and the second light-transmissive hole (44).

5. The force detection device (100) as claimed in claim 1, further comprising a plurality of weights (20); an end of the main body (10) has a plurality of inserting holes (13); each of the plurality of weights (20) fits in each of the plurality of inserting holes (13).

6. The force detection device (100) as claimed in claim 1, wherein the plurality of force detection units comprise a first force detection unit (32) and a second force detection unit (34); the first force detection unit (32) is adapted to detect a force along a first axis (L1); the first axis (L1) is perpendicular to the central axis (A); the two strain detection components of the first force detection unit (32) are two first strain detection components (321), wherein the two first strain detection components (321) are symmetrically disposed along the first axis (L1); the second force detection unit (34) is adapted to detect a force along a second axis (L2); the second axis (L2) is perpendicular to the central axis (A) and the first axis (L1); the two strain detection components of the second force detection unit (34) are two second strain detection components (341), wherein the two second strain detection components (341) are symmetrically disposed along the second axis (L2).

7. The force detection device (100) as claimed in claim 6, wherein each of the two first strain detection components (321) comprises two first strain detection structures (R1~R4); the plurality of first strain detection structures (R1~R4) of the two first strain detection components (321) are electrically connected to one another to form a first wheatstone bridge; the first wheatstone bridge has a first arm and a second arm; the two first strain detection structures (R3,R4) of the first strain detection component (321) are respectively located in an upper arm of the first arm and a lower arm of the second arm; the two first strain detection structures (R1,R2) of the other first strain detection component (321) are respectively located in a lower arm of the first arm and an upper arm of the second arm.

8. The force detection device (100) as claimed in claim 7, wherein each of the two second strain detection components (341) comprises two second strain detection structures (R5~R8); the plurality of second strain detection structures (R5~R8) of the two second strain detection components (341) are electrically connected to one another to form a second wheatstone bridge, wherein the second wheatstone bridge has a first arm and a second arm; the two second strain detection structures (R7,R8) of the second strain detection component (341) are respectively located in an upper arm of the first arm of the second wheatstone bridge and a lower arm of the second arm of the second wheatstone bridge; the two second strain detection structures (R5,R6) of the other second strain detection component (341) are respectively located in a lower arm of the first arm of the second wheatstone bridge and an upper arm of the second arm of the second wheatstone bridge.

9. The force detection device (100) as claimed in claim 1, wherein the plurality of force detection units comprise a tensile force detection unit (36); the two strain detection components of the tensile force detection unit (36) are two tensile force detection components (361), wherein the two tensile force detection components (361) are symmetrically disposed in the annular receiving groove (12a) of the main body (10) along the central axis (A).

10. The force detection device (100) as claimed in claim 1, wherein the plurality of force detection units comprise a torque detection unit (38); the two strain detection components of the torque detection unit (38) are two torque detection components (381), wherein the two torque detection components (381) are symmetrically disposed in the annular receiving groove (12a) of the main body (10) along the central axis (A).

11. The force detection device (100) as claimed in claim 1, further comprising an antenna (70), wherein the antenna (70) is disposed in the annular receiving groove (12a) and is electrically connected to the wireless transmission module (55); the encapsulation material (80) covers the antenna (70).

12. The force detection device (100) as claimed in claim 1, wherein the main body (10) has at least one first combination hole (14); the inner cylinder (40) has at least one second combination hole (43); a location of the at least one second combination hole (43) corresponds to a location of the at least one first combination hole (14).

13. A tool holder (1), which is adapted to be connected to a processing spindle and a tool (2), comprising:
the force detection device (100) as claimed in claim 1;
a tool holder head (200) adapted to be connected to the processing spindle and connected to an end of the main body (10);
a chuck (300) adapted to be connected to the tool (2) and connected to another end of the main body (10).
